# EUROPÄISCHE PATENTANMELDUNG

(11) **EP 1 577 217 A1**
(43) Veröffentlichungstag der Anmeldung: **21.09.2005**
(21) Anmeldenummer: 05101947.9
(22) Anmeldetag: 14.03.2005
(51) Int. Cl.: B65B 11/00, B65B 25/24, B65D 85/676

(54) **Verfahren zum Umwickeln eines Lang- oder Rundteils, beispielsweise eines Stahlteiles**

(30) Priorität: 15.03.2004 DE 102004012474; 13.05.2004 DE 102004023532
(71) Anmelder: H. Böhl GmbH, 42499 Hückeswagen (DE)
(72) Erfinder: Böhl, Michael, 42499 Hückeswagen (DE)
(74) Vertreter: Müller, Enno

(57) **Zusammenfassung**

Die Erfindung betrifft ein Verfahren zum Umwickeln eines Lang- oder Rundteils, beispielsweise eines Stahlteils etwa in Form eines Stahlband-Coils (11), einer Stahldraht-Rolle oder eines Rund-Stahlteils wie eines Wälzlager-Ringes, wobei das Stahlteil mit einer Stretchfolie, insbesondere einer Kunststoff-Stretchfolie (17), wendelartig und deckend eingewickelt wird. Zwecks Realisierung eines kurzfristigen Einwickelns eines Lang- oder Rundteils, ungeachtet seiner Materialbeschaffenheit, und eines zuverlässigen Transportschutzes schlägt die Erfindung vor, dass über die Stretchfolie (17) ein im Vergleich zu der Stretchfolie (17) wesentlich widerstandsfähigeres Bandmaterial (20) mit einer Klebstoffbeschichtung (21) auf der Seite der Stretchfolie (17) gleichfalls deckend gewickelt wird.

## Beschreibung

Die Erfindung betrifft ein Verfahren zum Umwickeln eines Lang- oder Rundteils, beispielsweise eines Stahlteils, etwa in Form eines Stahlband-Coils, einer Stahldraht-Rolle oder eines Rund-Stahlteils wie eines Wälzlager-Ringes, wobei das Stahlteil mit einer Stretchfolie, insbesondere einer Kunststoff-Stretchfolie, wendelartig und deckend eingewickelt wird.

Ein Verfahren der in Rede stehenden Art ist bekannt aus der WO95/12528, wobei die Stretchfolie im Bereich ihrer diagonal gegenüberliegenden Längsseitenränder Klebestreifen trägt, die beim wendelartigen Einwickeln eines zu umwickelnden Gutes in Haftverbindung zueinander treten. Es lässt sich jedoch bei dieser Ausgestaltung nicht vermeiden, dass die erste Wickellage mit ihrem Klebstoffrand an dem zu umwickelnden Gut anhaftet. Dies ist insbesondere beim Einwickeln von Lang- oder Rundteilen von Nachteil, da sich oftmals eine aggressive Wirkung des Klebers an der Oberfläche des zu umwickelnden Guts nicht vermeiden lässt. Dies ist z.B. unerwünscht beim Einwickeln eines Stahlband-Coils oder einer Stahldraht-Rolle. Auch ein optimaler Stoß- und Kantenschutz ist ferner durch eine derartig aufgebrachte Wickellage nicht stets realisierbar.

Sodann ist es aus der US 4,409,776 bekannt, eine Stretchfolie zu verwenden, deren Innenseite nicht klebend und deren Außenseite klebend gestaltet ist. Diese Ausgestaltung macht es erforderlich, dass nach dem Wickeln einer Lage die Stretch-Folie um 180° gedreht und danach die andere Wickellage in der gegenläufigen Steigung gewickelt werden muss. Ein solches Verfahren ist zeitaufwendig zufolge der gegenläufigen Wicklungen. Wird nur die erste Lage gewickelt, so liegen nach außen weisende Klebeflächen frei, was sich als ungünstig erweist.

Der Erfindung liegt die Aufgabe zugrunde, ein gattungsgemäßes Verfahren und ein mittels des Verfahrens geschaffenes Produkt so auszugestalten, dass kurzfristig das Einwickeln eines Lang- oder Rundteils, ungeachtet seiner Materialbeschaffenheit, erreichbar ist unter Erzielung eines zuverlässigen Transportschutzes und damit Schonung des eingewickelten Gutes.

Diese Aufgabe ist zunächst und im Wesentlichen bei einem Verfahren mit den Merkmalen des Anspruches 1 gelöst, wobei darauf abgestellt ist, dass über die Stretchfolie ein im Vergleich zu der Stretchfolie wesentlich widerstandsfähigeres Bandmaterial mit einer Klebstoffbeschichtung auf der Seite der Stretchfolie gleichfalls deckend gewickelt wird.

Die Gegenstände der weiteren Verfahrensansprüche 2 bis 6 sind nachstehend in Bezug zu dem Verfahrensanspruch 1 erläutert, können aber auch in ihrer unabhängigen Formulierung von Bedeutung sein.

Die Unteransprüche 7 bis 10 beziehen sich auf das durch das Verfahren geschaffene Produkt.

Zufolge derartiger Ausgestaltung ist ein gattungsgemäßes Verfahren angegeben, mit welchem Lang- oder Rundteile, insbesondere solche mit empfindlicher Oberfläche, mit Vorteil transportgeschützt eingewickelt werden. Das Lang- oder Rundteil kann z.B. aus Holz, Kunststoff oder Metall bestehen. So können auch Stahlteile, insbesondere in Form eines Stahlband-Coils, einer Stahldraht-Rolle oder eines Rund-Stahlteils, wie beispielsweise eines Wälzlagerringes, mit Vorteil transportgeschützt eingewickelt werden. Die Rund-Stahlteile und Coils können einen Durchmesser größer als 20 cm, insbesondere größer als 25 cm, insbesondere größer als 30 cm, insbesondere größer als 35 cm und mehr besitzen. Die Methode, über die Stretchfolie das bedeutend widerstandsfähigere, die Klebstoffbeschichtung aufweisende Bandmaterial zu wickeln, bringt den Vorteil einer großen Kombinationsmöglichkeit unterschiedlicher Stretchfolien und Bandmaterialien. Auf diese Weise lässt sich ein optimaler Schutz des eingewickelten Gutes erreichen. Grundsätzlich ist verhindert, dass die Klebstoffbeschichtung in Kontakt zu der Oberfläche des Lang- oder Rundteils gelangt, sei es z.B. ein Stahlband-Coil, eine Stahldraht-Rolle oder ein Wälzlager. Veränderungen an dem Stahlteil durch aggressiven Kleber treten demgemäß nicht auf. Auch liegt ein optimaler Kantenschutz bei dem umwickelten Lang- oder Rundteil vor. Bei einem Stahlband-Coil bedeutet dies, dass weitestgehend eine verlustfreie Verarbeitung desselben gewährleistet ist. Z.B. ist es möglich, je nach Größe des zu umwickelnden Lang- oder Rundteils ein entsprechend widerstandsfähiges Bandmaterial einzusetzen. Stets ist jedoch erreicht, dass dessen Klebstoffbeschichtung nicht in Kontakt zur Oberfläche des zu umwickelnden Gutes gelangt. Außerdem wird der Kantenschutz gewährleistet, so dass durch das erfindungsgemäße Umwickeln eine Mehrfachfunktion des Bandmateriales erreicht wird. Das Bandmaterial kann so beschaffen sein, dass ihm eine Verstärkung einverleibt ist. Um den Einwickelvorgang des zu umwickelnden Gutes zu beschleunigen, werden die Stretchfolie und das Bandmaterial in demselben Arbeitsgang gewickelt. Das bedeutet, dass im Wesentlichen ein zeitgleiches Einwickeln des zu umwickelnden Gutes mittels zweier Bänder stattfindet. Grundsätzlich laufen die Stretchfolie und das Bandmaterial derart zu, dass zunächst die Stretchfolie in Kontakt zu dem zu umwickelnden Gut gelangt und danach erst das die Klebstoffbeschichtung aufweisende Bandmaterial. Optimiert wird die Schutzfunktion dadurch, dass jedenfalls die Stretchfolie überlappend in den einzelnen Wendelgängen gewickelt wird. Diese Überlappung wird sodann überdeckt durch das Bandmaterial, so dass am zu umwickelnden Gut ein wendelförmiger Wulst umläuft verbunden mit einer erhöhten Transportsicherheit. Erfindungsgemäß ist es von Vorteil, wenn das Bandmaterial mit einer geringeren Breite gewickelt wird als die Stretchfolie. Das im Nachlauf zugeführte Bandmaterial kann daher mit seiner Klebstoffbeschichtung nie in Kontakt zur Oberfläche des Lang- oder Rundteils gelangen. Bezüglich des Einwickelns bspw. eines Stahlband-Coils oder einer Stahldraht-Rolle gibt es zwei Möglichkeiten. Die eine besteht darin, eine radiale Wicklung vorzunehmen. Das bedeutet, dass die Stretchfolie und das Bandmaterial durch die zentrale Öffnung der Rolle hindurchgeführt werden. Die andere Möglichkeit ist darin zu sehen, das Stahlband-Coil oder die Stahldraht-Rolle diametral zu umwickeln, und zwar unter Verschließen der mittleren Öffnung durch die Stretchfolie und das Bandmaterial. Das diametrale Einwickeln eignet sich insbesondere bei einem als Rund-Stahl ausgebildeten Wälzlager in einer Größenordnung von insbesondere 20 cm bis 35 cm und mehr. Dann können das Bandmaterial und die Stretch-Folie beispielsweise mittels eines Wickelringes um das Wälzlager herumgeführt werden, wobei gleichzeitig eine Drehverlagerung des Wälzlagers um seine Achse stattfindet. Damit sich auch größere Breiten von Bandmaterial gut an das Wickelgut anschmiegen, ist erfindungsgemäß vorgesehen, dass die Wicklung des Bandmateriales in Form von zwei oder mehr Streifen in Zuordnung zu einem Streifen der Stretchfolie durchgeführt wird. Beispielsweise kann ein Streifen des Bandmateriales von ca. 200mm bis 250mm mittig zertrennt sein oder das Zertrennen erfolgt während des Zulaufs des Bandmateriales. Grundsätzlich ist jedoch auch hier vorgesehen, dass die mehreren Streifen des Bandmateriales gleichzeitig zulaufen, so dass kurzfristig der Einwickelvorgang zu bewerkstelligen ist.

Das durch das erfindungsgemäße Verfahren geschaffene Produkt, also das eingewickelte Lang- oder Rundteil, bspw. Stahlband-Coil, Stahldraht-Rolle oder Wälzlager, zeichnet sich dadurch aus, dass über die Stretchfolie ein im Vergleich zu der Stretchfolie wesentlich widerstandsfähigeres Bandmaterial mit einer Klebstoffbeschichtung auf der Seite der Stretchfolie gleichfalls deckend gewickelt ist. Sodann ist jedenfalls die Stretchfolie überlappend in den einzelnen Wendelgängen gewickelt. Auch ist das Bandmaterial mit einer geringeren Breite gewickelt als die Stretchfolie. Schließlich ist die Wicklung des Bandmaterials in Form von zwei oder mehr Streifen in Zuordnung zu einem Streifen der Stretchfolie durchgeführt.

Nachstehend wird das erfindungsgemäße Verfahren anhand von zwei Ausführungsbeispielen erläutert. Es zeigt:
- Fig.1: ein in Form eines Stahlband-Coils gebrachtes Lang-Stahlteil während des Einwickelns gemäß dem ersten Verfahrensvorschlag,
- Fig. 2: den Schnitt nach der Linie II-II in Figur 1,
- Fig. 3: den Schnitt nach der Linie III-III in Figur 2,
- Fig. 4: ein nach dem erfindungsgemäßen Verfahren eingewickeltes Stahlband-Coil in perspektivischer Darstellung,
- Fig. 5: eine der Figur 2 entsprechende Darstellung jedoch betreffend die zweite Verfahrensweise in der Anfangsphase des Einwickelns und
- Fig. 6: die Folgedarstellung der Figur 5.

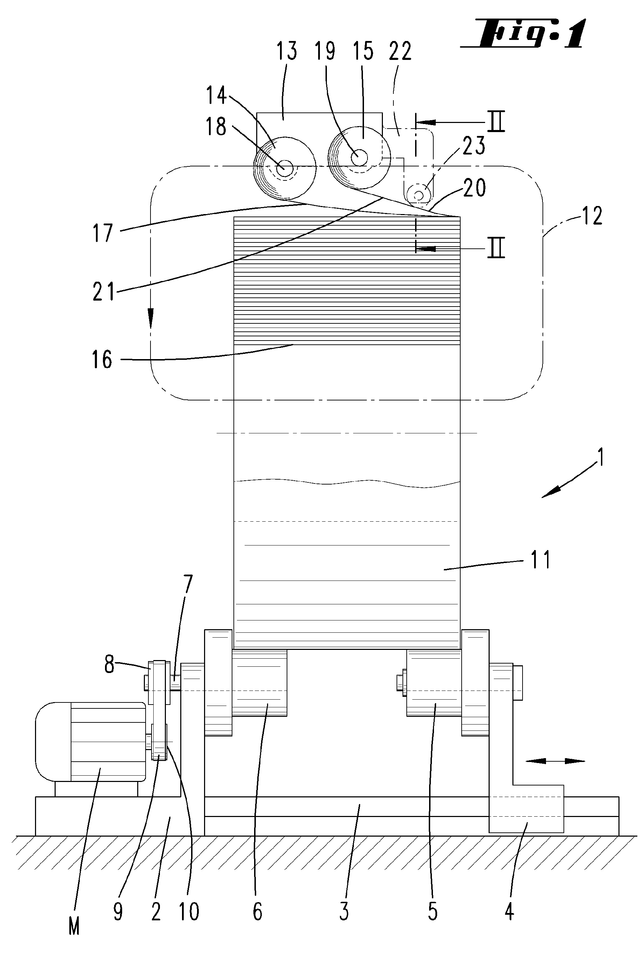

Eine zur Durchführung des erfindungsgemäßen Verfahrens geeignete Vorrichtung ist als Ganzes mit der Ziffer 1 bezeichnet und in Figur 1 schematisch dargestellt. Im Einzelnen besitzt die Vorrichtung ein Fußgestell 2 mit von diesem ausgehender Führungsschiene 3. Auf letzterer ist verschieblich ein Schlitten 4 angeordnet. Letzterer ist Träger einer Stützrolle 5. Auf gleicher Höhe liegt ihr eine weitere Stützrolle 6 gegenüber. Getragen ist diese von einem Achszapfen 7 des Fußgestells 2. Auf dem Achszapfen 7 sitzt eine Riemenscheibe 8, um welche ein Antriebsriemen 9 gelegt ist. Letzterer umschlingt die Antriebsscheibe 10 eines auf dem Fußgestell 2 angeordneten, in seiner Drehzahl veränderbaren Antriebsmotors M.

Die beiden Stützrollen 5, 6 bilden in Verbindung mit weiteren, nicht veranschaulichten Stützrollen das Auflager für ein Stahlband-Coil 11. Bezüglich desselben handelt es sich um ein zu einer Rolle gewickeltes Stahlblech. Die Vorrichtung 1 dient dazu, dieses Stahlband-Coil einzuwickeln. Da das Stahlband-Coil eine unterschiedliche Breite aufweisen kann, ist der Schlitten 4 in Richtung des Doppelpfeiles verlagerbar und feststellbar. Anstelle eines Stahlband-Coils könnte auch ein anderes Rundteil mit einer anderen Materialbeschaffenheit umwickelt werden. Grundsätzlich handelt es sich um solche Rundteile, deren Oberfläche nicht beeinträchtigt werden soll.

Oberhalb des Fußgestells 2 beinhaltet die Vorrichtung 1 eine mit strichpunktierten Linien angedeutete Führungsbahn 12. Entlang derselben ist in Pfeilrichtung ein Wagen 13 verlagerbar. Dieser ist Träger zweier im Wesentlichen hintereinander angeordneter Vorratsrollen 14,15. Die Führungsbahn 12 ist so ausgerichtet, dass der Wagen 13 mit den Vorratsrollen 14,15 das Stahlband-Coil 11 einzuwickeln vermag, wobei der Wagen 13 die Coil-Öffnung 16 durchwandert. Da mit dem Umwickeln des Stahlband-Coils einhergehend eine langsame Drehung des Stahlband-Coils stattfindet, erfolgt ein wendelartiges Einwickeln des Stahlband-Coils 11.

Von der Vorratsrolle 14 wird eine Kunststoff-Stretchfolie 17 abgewickelt. Diese hat das Bestreben, an dem Material des Stahlband-Coils 11 anzuhaften, jedoch nicht zu kleben. Die auf einer Achse 18 des Wagens 13 drehbar angeordnete Vorratsrolle 14 wird von einer nicht veranschaulichten Bremsvorrichtung so gesteuert, dass die Kunststoff-Stretchfolie 17 mit einer bestimmungsgemäßen Zugspannung um das Stahlband-Coil gewickelt wird.

Höhenversetzt zur Achse 18 erstreckt sich eine Achse 19 für die Vorratsrolle 15 derart, dass der Abstand dieser Achse 19 größer ist als der Abstand der Achse 18 zur Mittelachse des Stahlband-Coils. Von der Vorratsrolle 15 wird ein im Vergleich zu der Stretchfolie 17 wesentlich widerstandsfähigeres Bandmaterial 20 abgezogen. Auf der der Stretchfolie 17 zugekehrten Seite ist das Bandmaterial mit einer Klebstoffbeschichtung 21 versehen. Letztere ist geeignet, mit der Kunststoff-Stretchfolie 17 in eine innige Klebeverbindung einzugehen. Bezüglich des Bandmateriales 20 besteht eine große Wahlfreiheit hinsichtlich des Werkstoffes. Dies kann bis hin zu gewebeverstärkten Bändern geschehen. Wesentlich ist jedoch, dass durch das Bandmaterial 20 ein hoher Transportschutz erreicht wird.

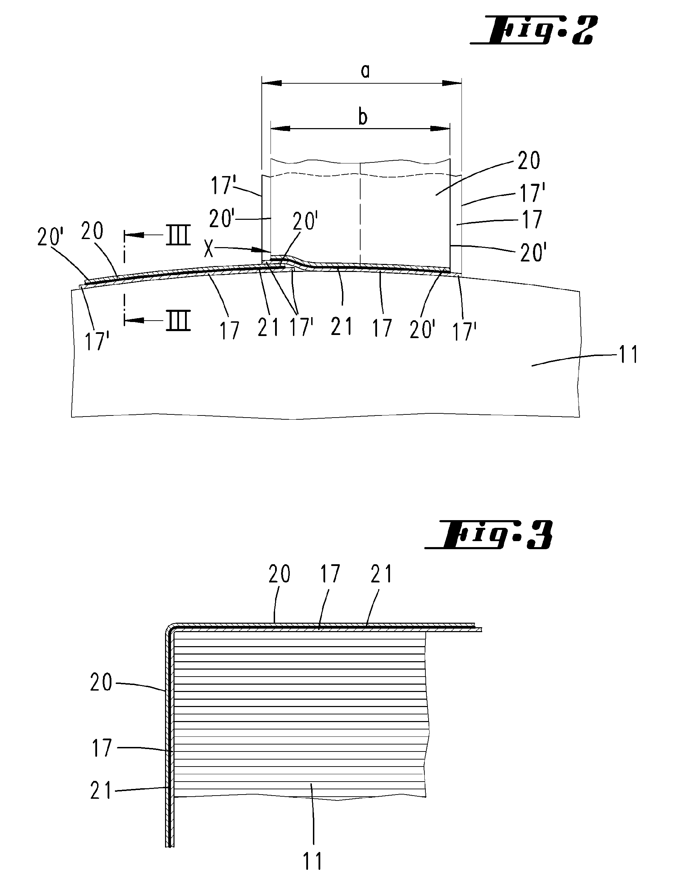

Wie Figur 1 zeigt, werden die Stretchfolie 17 und das Bandmaterial 20 in demselben Arbeitsgang gewickelt. Dies geschieht in der Weise, dass jedenfalls die Stretchfolie 17 überlappend in den einzelnen Wendelgängen gewickelt wird, vergleiche hierzu insbesondere Figur 2, 5 und 6. Dabei ist wesentlich, dass das Bandmaterial 20 mit einer geringeren Breite gewickelt wird als die Kunststoff-Stretchfolie 17.

Figur 1 und 2 stellen heraus, dass die Vorratsrollen 14,15, hintereinanderliegend in gleicher Ebene vorgesehen sind. Die von der Vorratsrolle 14 abgezogene Kunststoff-Stretchfolie 17 besitzt eine Breite a. Die Breite b des Bandmateriales 20 ist geringer als die Breite a derart, dass die Seitenränder 17' der Stretchfolie 17 die Seitenränder 20' des Bandmateriales 20 geringfügig überragen.

Bei einem wendelförmigen Einwickeln des Stahlband-Coils 11 treten sowohl die Randzonen der Kunststoff-Stretchfolie 17 als auch die des Bandmateriales 20 in Überlappung, so dass im Überlappungsbereich X vier Lagen abwechselnd übereinander liegen, welche wendelförmig um das Stahlband-Coil 11 herumgeführt sind. Hierdurch wird eine besonders widerstandsfähige Schutzzone geschaffen, so dass insgesamt Transportschäden am Material des Stahlband-Coils weitgehend vermieden sind.

Gemäß Figur 1 ist mit strichpunktierten Linien angedeutet, dass der Wagen 13 einen Ausleger 22 beinhalten kann, welches Träger eines Schneidmessers 23 ist. Mit diesem ist es möglich, die Breite des Bandmateriales 20 in mehrere Streifen zu zerschneiden, welche während des Einwickelprozesses gleichzeitig zulaufen. Beim Ausführungsbeispiel wird ein Schneidmesser 23 eingesetzt, so dass das Bandmaterial 20 durch einen mittleren Schnitt, wie angedeutet ist, in zwei Einzelteilen zertrennt wird. Bei Bedarf können jedoch auch mehrere Schneidmesser 23 zum Einsatz gelangen, um Streifen geringerer Breite zu erhalten. Der Vorteil eines derartigen Zerschneidens des Bandmateriales in mehrere Streifen bringt den Vorteil, dass die Streifen im Randbereich des zu umwickelnden Gutes zu einer geringeren Faltenneigung führen. Die Schneidvorrichtung ist so ausgelegt, dass sie wahlweise einsetzbar und ausschaltbar ist.

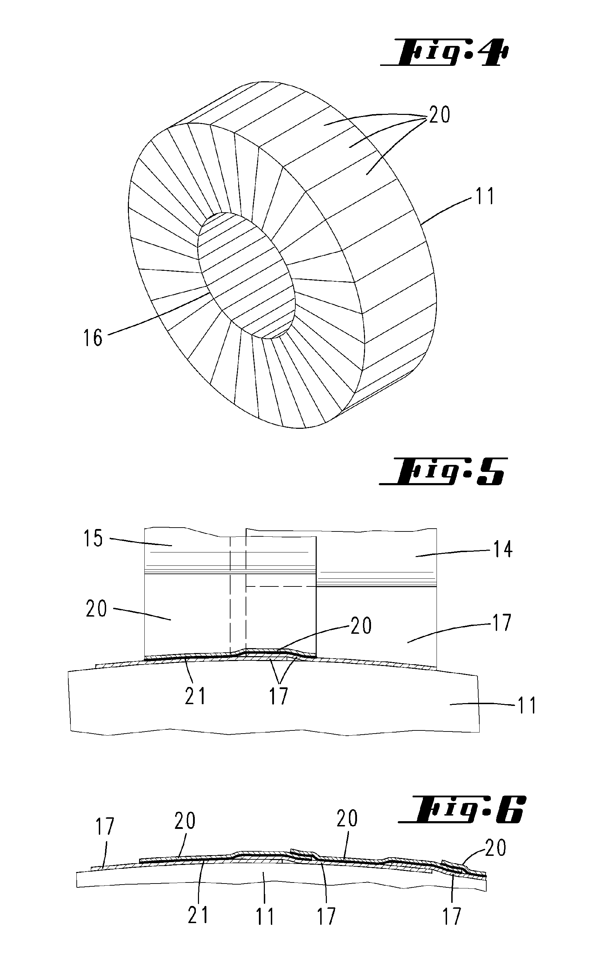

Gemäß Figur 5 und 6 sind die Vorratsrollen 14,15 nicht in gleicher Ebene, sondern versetzt zueinander angeordnet. Nach wie vor findet jedoch ein wendelartiges Einwickeln des Stahlband-Coils 11 statt. Zuerst läuft die Kunststoff-Stretchfolie 17 zu. Beispielsweise nach einer Wickellage der Kunststoff-Stretchfolie 17 wird dann das Bandmaterial 20 zugeführt, welches auf seiner der Stretchfolie 17 zugekehrten Seite die Klebstoffbeschichtung 21 enthält. Auch hier ist sichergestellt, dass die Klebstoffbeschichtung 21 nicht in direktem Kontakt zur Oberfläche des Stahlband-Coils 11 gelangt, sondern nur mit der zugekehrten Seite der Kunststoff-Stretchfolie 17.

Wie insbesondere Figur 5 und 6 veranschaulichen, entsteht im Überlappungsbereich von Stretchfolie 17 und Bandmaterial 20 ein dreilagiger Wulst, der zu einem erhöhten Stoßschutz führt.

Grundsätzlich ist jedoch bei beiden Arten des Umwickelns sichergestellt, dass unverrückbare Wickellagen am Stahlband-Coil 11 entstehen. Diese bringen den Vorteil eines hohen Korrosionsschutzes und verhindern darüber hinaus ein Beschädigen des Lang-Stahlteils, sei es eine Stahldraht-Rolle oder ein Stahlband-Coil oder ein Rundteil anderer Materialbeschaffenheit und Oberfläche.

Während die beiden vorgeschriebenen Arten ein radiales Umwickeln betreffen, ist es auch möglich, beispielsweise mittels eines Wickelringes Rund/Stahlteile wie Wälzlager durch diametrales Umwickeln zu umhüllen. Während des Wickelvorganges dreht sich das Wälzlager, so dass ebenfalls wendelförmige Wickellagen herstellbar sind.

Eine einen Wickelring aufweisende Vorrichtung ist auch geeignet, Langteile, also gestreckte Teile, zu umwickeln. Die Materialbeschaffenheit der Langteile ist unwesentlich. Beispielsweise wären Holz- oder Kunststoffprofile in der vorbeschriebenen Weise umwickelbar. Das Langteil könnte aus Metall, insbesondere Stahl bestehen. Grundsätzlich ist erreicht, dass die Oberfläche des zu umwickelnden Langteils nicht in Kontakt zur Klebstoffbeschichtung gelangt.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen.

## Patentansprüche

1. Verfahren zum Umwickeln eines Lang- oder Rundteils, beispielsweise eines Stahlteils etwa in Form eines Stahlband-Coils (11), einer Stahldraht-Rolle oder eines Rund-Stahlteils wie eines Wälzlager-Ringes, wobei das Stahlteil mit einer Stretchfolie, insbesondere einer Kunststoff-Stretchfolie (17), wendelartig und deckend eingewickelt wird, **dadurch gekennzeichnet, dass** über die Stretchfolie (17) ein im Vergleich zu der Stretchfolie (17) wesentlich widerstandsfähigeres Bandmaterial (20) mit einer Klebstoffbeschichtung (21) auf der Seite der Stretchfolie (17) gleichfalls deckend gewickelt wird.

2. Verfahren nach Anspruch 1 oder insbesondere danach, **dadurch gekennzeichnet, dass** die Stretchfolie (17) und das Bandmaterial (20) in demselben Arbeitsgang gewickelt werden.

3. Verfahren nach einem oder mehreren der vorhergehenden Ansprüche oder insbesondere danach, **dadurch gekennzeichnet, dass** jedenfalls die Stretchfolie (17) überlappend in den einzelnen Wendelgängen gewickelt wird.

4. Verfahren nach einem oder mehreren der vorhergehenden Ansprüche oder insbesondere danach, **dadurch gekennzeichnet, dass** das Bandmaterial (20) mit einer geringeren Breite gewickelt wird als die Stretchfolie (17).

5. Verfahren nach einem oder mehreren der vorhergehenden Ansprüche oder insbesondere danach, **dadurch gekennzeichnet, dass** die Wicklung des Bandmateriales (20) in Form von zwei oder mehr Streifen in Zuordnung zu einem Streifen der Stretchfolie (17) durchgeführt wird.

6. Verfahren nach einem oder mehreren der vorhergehenden Ansprüche oder insbesondere danach, **dadurch gekennzeichnet, dass** die mehreren Streifen des Bandmateriales (20) gleichzeitig zulaufen.

7. Lang- oder Rundteil, bspw. Stahlteil, insbesondere in Form eines Stahlband-Coils (11), einer Stahldraht-Rolle oder eines Wälzlagers, wobei das Stahlteil mit einer Stretchfolie, insbesondere einer Kunststoff-Stretchfolie (17), wendelartig und deckend umwickelt ist, **dadurch gekennzeichnet, dass** über die Stretchfolie (17) ein im Vergleich zu der Stretchfolie (17) wesentlich widerstandsfähigeres Bandmaterial (20) mit einer Klebstoffbeschichtung (21) auf der Seite der Stretchfolie (17) gleichfalls deckend gewickelt ist.

8. Lang- oder Rundteil, bspw. Stahlteil, insbesondere nach Anspruch 7 oder insbesondere danach, **dadurch gekennzeichnet, dass** jedenfalls die Stretchfolie (17) überlappend in den einzelnen Wendelgängen gewickelt ist.

9. Lang- oder Rundteil, bspw. Stahlteil nach einem oder mehreren der vorhergehenden Ansprüche oder insbesondere danach, **dadurch gekennzeichnet, dass** das Bandmaterial (20) mit einer geringeren Breite gewickelt ist als die Stretchfolie (17).

10. Lang- oder Rundteil, bspw. Stahlteil nach einem oder mehreren der vorhergehenden Ansprüche oder insbesondere danach, **dadurch gekennzeichnet, dass** die Wicklung des Bandmaterials (20) in Form von zwei oder mehr Streifen in Zuordnung zu einem Streifen der Stretchfolie (17) durchgeführt ist.
